# EUROPEAN PATENT APPLICATION

(11) **EP 1 648 081 A1**
(43) Date of publication of application: **19.04.2006**
(21) Application number: 05019132.9
(22) Date of filing: 02.09.2005

(54) **Feed rate controller**

(30) Priority: 29.09.2004 US 952961
(71) Applicant: Techtronic Industries Co., Ltd., Tsuen Wan, N.T. Hong Kong (CN)
(72) Inventor: Minalga, Philip F., Pendleton, SC 29670 (US); Peot, David G., Easley, SC 29642 (US)
(74) Representative: HOFFMANN EITLE

(57) **Abstract**

A feed rate control system may provide feedback to the power tool operator that may assist the operator to obtain consistently high quality output. The feed rate control system may also automatically output a feed rate control signal, optionally influenced by the operating mode of the power tool. In a planer, for example, the feed rate control system may execute different control techniques depending on whether the planer is in 'finish' mode or 'dimension' mode.

## Description

### BACKGROUND

### 1. Technical Field

This invention relates to power tools. In particular, this invention relates to controlling material feed rate through a power tool such as a planer.

### 2. Background Information

The form, function, and application of power tools are extremely diverse. Coupled with the recent growth in the popularity of do-it-yourself hardware stores, power tools are present in the hands of the everyday consumer as much as the professional contractor. Regardless of who operates the power tool however, the operator expects the power tool to consistently deliver a quality finished product.

Accordingly, it is sometimes beneficial to monitor feed rate of a workpiece through a power tool. If the power tool senses that the feed rate it too slow or too great, the power tool may modify the feed rate or alert the operator. In the past, the power tools have determined feed rate based on invasive techniques for monitoring motor currents and voltages. The invasive techniques require coupling directly into motor current lines, influence the application of power to the motor, and increase the difficulty of servicing a faulty sensing component.

A need has long existed for improved feed rate control and monitoring.

### BRIEF SUMMARY

A feed rate control system for a power tool monitors motor parameters such as motor current. The control system may provide feedback to the power tool operator that assists the operator with obtaining consistently high quality output. The feed rate control system may also influence the feed rate of a workpiece or the operation of the motor to help the operator obtain consistently high quality results from the power tool.

The feed rate control system may include a magnetic field sensor, a display, and a controller. The magnetic field sensor may be displaced from a motor current line, but positioned to receive a magnetic field established by motor current in the motor current line. The display may provide one or more indicators that may convey a motor undercurrent, motor current in-range, or a motor overcurrent condition to the tool operator.

The controller may be connected to the magnetic field sensor through a sensor output line. The controller may measure the sensor output and responsively output a feed rate control signal. The controller may control the feed rate differently depending on the current operating mode of the power tool. In a planer, for example, the controller may control the feed rate differently depending on whether the planer is in 'finish' mode or 'dimension' mode.

### BRIEF DESCRIPTION OF THE DRAWINGS.

Figure 1 shows a power tool feed rate control system.

Figure 2 shows a schematic of a current sensor and display.

Figure 3 shows a method for monitoring and controlling feed rate.

### DETAILED DESCRIPTION

The elements illustrated in the Figures interoperate as explained in more detail below. Before setting forth the detailed explanation, however, it is noted that all of the discussion below, regardless of the particular implementation being described, is exemplary in nature, rather than limiting. For example, although the discussion below may make reference to a planer power tool, the control system is applicable to other power tools.

Furthermore, although this specification describes specific components of the control system, methods, systems, and articles of manufacture consistent with the control system technology may include additional or different components. For example, a controller may be implemented with a microprocessor, microcontroller, application specific integrated circuit (ASIC), discrete logic, or a combination of other types of circuits acting as explained above. The instructions discussed below may be parts of a single program, separate programs, or distributed across multiple memories and/or processors.

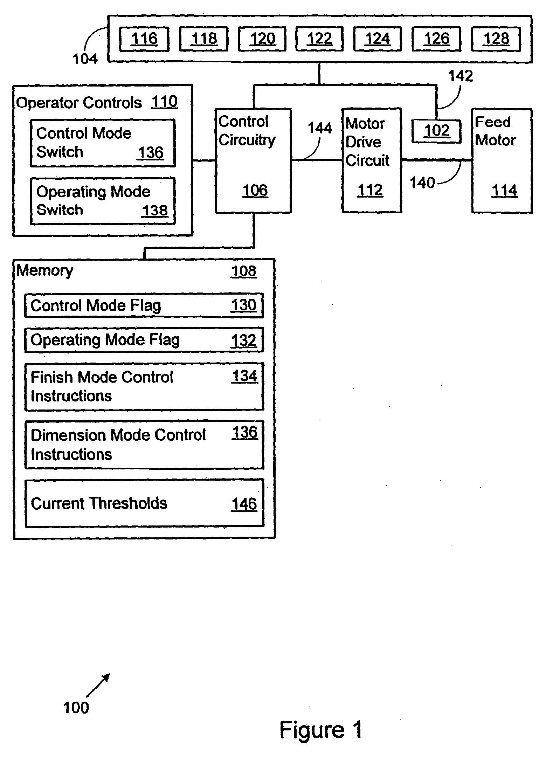

In Figure 1, a power tool feed rate system 100 may include a current sensor 102, a display 104, and a controller 106. The controller 106 may be connected to a memory 108. The system 100 may also include operator controls 110, a motor drive circuit 112, and a feed motor 114.

The sensor 102 may be a non-invasive sensor. For example, the sensor 102 may be a magnetic field sensor that is disposed near the motor current line 103, but not integrated into the motor current line 103. The sensor 102 does not interfere with current flowing through or voltage applied to the feed motor 114. Accordingly, the sensor 102 does not adversely interfere with motor operation.

In other words, the sensor 102 may be separate from and/or isolated from direct interaction with the motor current line 140. As an example, the sensor 102 may be a Hall effect sensor disposed near the motor current line 140. The Hall effect sensor may be a CSA-1V available from Sentron Corporation, an ACS750xCA-050 available from Allegro Corporation, or another sensor.

The sensor 102 may provide a sensor output signal on the sensor output line 142. The sensor output signal may be responsive to motor current flowing through the feed motor 114. The controller 106 may monitor the sensor output signal and may apply a feed rate control technique as discussed in more detail below.

The display 104 may include one or more indicators, such as those labeled 116, 118, 120, 122, 124, 126, and 128. The indicators 116-128 may be LEDs, lamps, or other indicators. The indicators 116-128 may provide feedback to the tool operator regarding the motor current flowing to the feed motor 114.

In one implementation, the indicators 116-128 may form an array of LEDs that provide a bar graph representation of motor current. For example, the indicators 116-128 may illuminate sequentially as motor current increases. One or more of the indicators 116-128 may be visually distinctive. For example, the indicators 116-124 may be Green LEDs, the indicator 126 may be a Yellow LED, and the indicator 128 may be a Red LED. The display 104 may provide feedback to the operator of undercurrent conditions, current in-range conditions, and overcurrent conditions.

The memory 108 may store a control mode flag 130 and an operating mode flag 132. In addition, the memory may also store instructions for execution by the controller 106. The instructions may include motor control instructions that implement one or more motor control techniques.

The control mode flag 130 may be set to establish, indicate, or represent the current power tool control mode. For example, the control mode flag 130 may be set to indicate that the power tool is in a 'manual' control mode or an 'automatic' control mode. The control mode flag 130 may establish other control modes. The control modes may differ between or depending on the power tool in which the system 100 is implemented.

In the 'manual' mode, the controller 106 may refrain from exercising control over the feed motor 114, or may exercise limited control over the feed motor 114. In the 'automatic' mode, the controller 106 may exercise relatively greater control over the feed motor 114. For example, in 'manual' mode, the operator may be solely responsible for controlling feed rate. In 'automatic' mode, the controller 106 may control feed rate depending on the current power tool operating mode.

The operating mode flag 132 may be set to establish, indicate, or represent the current power tool operating mode. In a planer, for example, the operating mode flag 132 may indicate that the power tool is in 'dimension' mode, 'finish' mode, or in another mode. The 'dimension' mode of operation may provide a rough cut, first pass cut, or initial cut of a workpiece. The 'finish' mode of operation may provide a fine cut, a carefully controlled cut, or other final cut after the initial cut.

The motor control techniques may be selected based on the particular power tool in which they are implemented. The techniques may also be based on power tool control settings, or based on other factors. In the context of a planer, the controller 106 may apply a motor control technique selected based on whether the planer is in the finish' mode of operation or the 'dimension' mode of operation.

The motor control techniques may be implemented by sequences of instructions, subroutines, algorithms, or other programs in the memory 108. As shown in Figure 1, the memory may include 'finish' motor control instructions 134 and 'dimension' motor control instructions 136. Each will be described in more detail below.

The memory 108 may also include one or more current thresholds 146. The current thresholds 146 may establish points of comparison for the motor current. The current thresholds 146 may establish undercurrent, overcurrent, and nominal current levels for any given power tool, in any given operating mode, for any given material, depth of cut, feed rate, or other parameter.

As examples, the current thresholds 146 may establish an overcurrent level for a planer in dimension mode operating on a wood workpiece, an overcurrent level for a planer in finish mode operating on a wood workpiece, or any other threshold. The controller 106 may compare the sensor output against one or more of the current thresholds 146. In response, the controller 106 may establish the feed rate control signal to the motor drive circuit 112.

The operator controls 110 may provide one or more buttons, switches, dials, or other controls. The operator controls 110 may include a control mode switch 136 and an operating mode switch 138. The control mode switch 136 may change the power tool between the 'manual' control mode and the 'automatic' control mode. The operating mode switch 128 may change the power tool between the 'dimension' mode and the 'finish' mode of operation.

The controller 106 may connect to the operator controls 110. The controller 106 may monitor the state of each switch in the operator controls 110. In response, the controller 106 may then set the control mode flag 130 and operating mode flag 132 consistent with the settings of the operator controls 110.

The motor drive circuit 112 may include circuitry or logic for providing the feed motor 114 with power. For example, the motor drive circuit 112 may include a Triac, FET, or other switch. The circuit 112 may control the switch with a DC or AC signal that may be pulse width modulated to control the amount of power and resultant motor speed of the feed motor 114.

In one implementation, the controller 106 may provide the DC or AC signal as the feed rate control signal. For example, by increasing the pulse width of the feed rate control signal, the controller 106 may deliver more power to the feed motor 114. The feed motor 114 may thereby increase in speed to increase the feed rate of the power tool. Similarly, the controller 106 may decrease the pulse width of the feed rate control signal to reduce the amount of power to the feed motor 114. The feed motor 114 may slow, and the feed rate may decline.

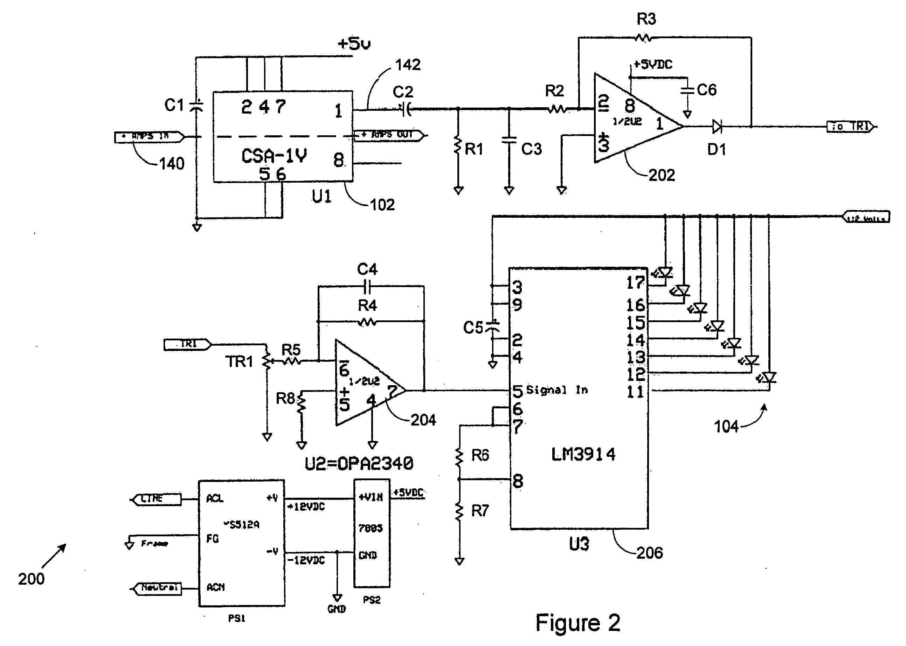

In Figure 2, a schematic 200 shows one implementation of the sensor 102 and display 104. Table 1, below, identifies components that may be used in the schematic 200 for one implementation of the sensor 102 and display 104.

| Table 1 | |
|---|---|
| Component | Value |
| C1, C3 | 0.1 uf |
| C2 | 10 uf |
| C4, C6 | 0.01 uf |
| C5 | 2.2 uf |
| | |
| R1 | 8.25k, 1% |
| R2, R3 | 10k, 1% |
| R4 | 430k, 1% |
| R5 | 20k, 1 % |
| R6 | 1.2k,1% |
| R7 | 3.6k, 1 % |
| R8 | 20k, 1 % |
| TR1 | 2k, 20% |
| | |
| U1 | Sentron CSA-1V |
| U2 | Texas Instruments OPA2340 |
| U3 | National Semiconductor LM3914 |
| | |
| PS1 | Cosel YS512A |
| PS2 | National Semiconductor 7805 |

The sensor 102 is shown positioned with one axis along the motor current line 140. The sensor 102 may receive the magnetic field arising from current flow in the motor current line 140. The sensor output line 142 may carry a responsive sensor output signal.

The sensor output signal may be processed or conditioned for subsequent circuitry. For example, the operational amplifier 202 may buffer or amplify and rectify the sensor output signal. The output of the operational amplifier 202 may be filtered by the second operational amplifier 204.

A display driver 206 may control the display 104. As shown in Figure 2, the display includes multiple LEDs. The LEDs may be arranged in an intuitive bar array for ease of interpretation by the tool operator. In one implementation, the display driver 206 is a dot-bar display driver, LM3914, available from National Semiconductor.

The components value shown in Table 1 may be altered for any given implementation of the sensor 102 and display 104. As one example, the component values may be altered so that any indicator in the display 104 represents any desired amount of motor current. As another example, the component values may be selected according to expected or pre-detertnined levels of motor current for the particular power tool in which the circuitry is implemented. Furthermore, although the implementation shown in Figure 2 is adapted for an A.C. current signal, other implementations may employ circuitry adapted to respond to D.C. current signals.

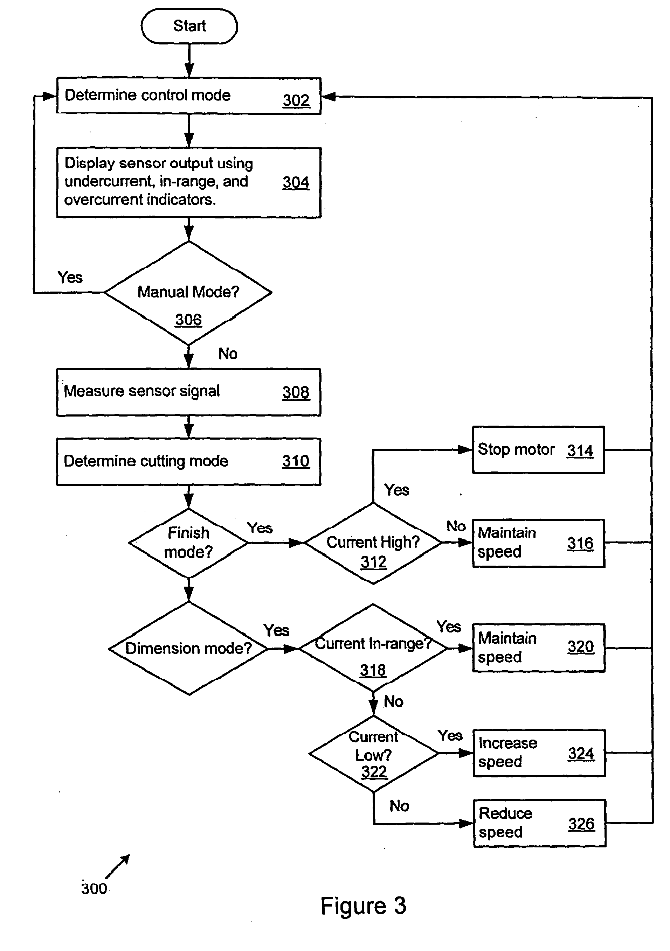

In Figure 3, a flow diagram 300 shows the acts that may be taken by the system 100. The controller 106 may determine the control mode, for example by reading the control mode flag 130 (Act 302). The control mode flag 130 may indicate that the power tool is in a 'manual' mode or an 'automatic' mode, or other mode. The current control mode may influence operation of the system 100 as will be described in more detail below.

The system 100 may display the sensor output on the display 104 (Act 304). For example, the display 104 may provide undercurrent, overcurrent, and current in-range indicators. If the power tool is in manual mode, the controller 106 may refrain from exercising feed rate control. Instead, for example, the power tool may continue to monitor the control mode flag 130 and display a motor current indicator (Act 306). The power tool operator may then manually control feed rate with feedback provided by the display 104.

The system 100 may exercise control over feed rate, for example when the system 100 is in 'automatic' mode. To that end, the system 100 may measure the sensor signal (Act 308). As examples, the controller 106 may digitize the output of the sensor 102, or discrete circuitry may amplify, filter, or otherwise condition the sensor signal. The feed rate control technique may differ based on tool parameter settings. In a planer, for example, the parameter settings may distinguish between cutting modes such as a 'finish' mode or a 'dimension' mode.

Accordingly, the controller 106 determines the cutting mode (Act 310). In 'finish' mode, the controller 106 may apply a feed rate control technique shown in Figure 3 by Acts 312, 314, and 316. In the 'dimension' mode, the controller 106 may apply a feed rate control technique shown in Figure 3 by Acts 318, 320, 322, 324, and 326.

In applying feed rate control techniques, the control circuitry may compare motor characteristics against thresholds. The motor characteristics may include motor current, motor speed, or other motor characteristics. For example, the control circuitry may compare the measured sensor signal 308 against the current thresholds 146.

In the 'finish' mode, the system 100 may determine whether the feed rate is too great for a quality finish cut. For example, the control circuitry may compare the measured sensor output to one or more of the current thresholds 146 established for a 'finish' mode cut. If the control circuitry determines that the motor current is too high (Act 312), the control circuitry may stop the motor (Act 314). Othervvise, the controller 106 may maintain the motor speed (Act 316).

In the 'dimension' mode, the system 100 may determine whether the feed rate is in a range suitable for a dimension cut (Act 318). If it is in-range, the control circuitry 106 may maintain the motor speed (Act 320). Otherwise, the control circuitry may determine whether the feed rate is too low (Act 322).

If it is too low, the control circuitry may increase the feed rate (Act 324). The feed rate may be increased by providing additional power to the feed motor 114, for example by extending the duty cycle of a pulse width modulated control signal. If the feed rate it too high, the control circuitry may reduce the feed rate (Act 326). The feed rate may be reduced by reducing power to the feed motor 114, for example by reducing the duty cycle of a pulse width modulated control signal.

While various embodiments of the invention have been described, many more embodiments and implementations are possible within the scope of the invention. For example, the controller and/or memory may be replaced with discrete circuitry or logic that may respond to the operator controls 110 and that may implement automatic motor control as noted above. As another example, the controller 106 may control the display 104. The display may be individual LEDs, may be a LCD that may display other power tool information, or may be implemented in other manners. Accordingly, the invention is not to be restricted except in light of the attached claims and their equivalents.

## Claims

1. A feed rate control system comprising:
a magnetic field sensor displaced from a motor current line and positioned to receive a magnetic field established by a motor current in the motor current line;
a controller coupled to the magnetic field sensor through a sensor output line;
a memory coupled to the controller, the memory comprising:
a control mode flag establishing a manual mode or an automatic mode for the power tool; and instructions for execution by the controller comprising:
instructions for determining a sensor output on the sensor output line; and
instructions for automatically outputting a feed rate control signal based on the sensor output, when the control mode flag indicates the automatic mode; and
a display responsive to the sensor output.

2. The feed rate control system of claim 1, further comprising:
a cut type flag indicating a first cut type or a second cut type; and
where the instructions for automatically outputting the feed rate control signal comprise:
first instructions for automatically outputting the feed rate control signal when the cut type flag establishes the first cut type; and
second instructions for automatically outputting the feed rate control signal when the cut type flag establishes the second cut type.

3. The feed rate control system of claim 2, where at least one of the cut types comprises a 'dimension' cut type or a 'finish' cut type.

4. The feed rate control system of claim 2, where the first cut type is a 'dimension' cut type and where the second cut type is a 'finish' cut.

5. The feed rate control system of claim 2, where the first instructions comprise instructions for selectively maintaining feed rate, increasing feed rate, and reducing feed rate and where the second instructions comprise instructions for selectively maintaining feed rate, and stopping a cutting motor coupled to the motor current line.

6. The feed rate control system of claim 4, where the first instructions comprise:
instructions for selectively maintaining feed rate, increasing feed rate, and reducing feed rate.

7. The feed rate control system of claim 6, where the second instructions comprise:
instructions for selectively maintaining feed rate, and stopping a cutting motor coupled to the motor current line.

8. The feed rate control system of claim 1, where the magnetic field sensor is a Hall effect sensor.

9. A feed rate control system comprising:
a non-invasive motor current sensor comprising a motor current sensor output;
a display responsive to a signal on the motor current sensor output; and
control circuitry coupled to the current sensor, the control circuitry operable to determine an operating mode and apply one of multiple feed rate control techniques selected based on the operating mode.

10. The feed rate control system of claim 9, further comprising:
a memory storing:
an operating mode flag indicating a first tool mode or a second tool mode;
first instructions that select from the multiple feed rate control techniques based on the operating mode flag; and
second instructions that establish multiple feed rate control techniques; and where the control circuitry comprises:
a controller coupled to the memory and the motor current sensor output for executing the first and selected second instructions.

11. The feed rate control system of claim 9, where the display comprises a light emitting diode array comprising an undercurrent indicator, an in-range indicator, and an overcurrent indicator.

12. The feed rate control system of claim 9, where the multiple feed rate control techniques comprise a first cut type control technique and a second cut type control technique.

13. The feed rate control system of claim 9, where at least one of the multiple feed rate control techniques, comprises a 'finish' control technique.

14. The feed rate control system of claim 9, where at least one of the multiple feed rate control techniques comprises a 'dimension' control technique.

15. The feed rate control system of claim 9, further comprising a feed rate control signal output coupled to the control circuitry.

16. The feed rate control system of claim 15, where the feed rate control signal output comprises a planer feed rate control signal output.

17. A control system comprising:
a motor current sensor displaced from a motor current line;
a feed rate display responsive to the current sensor and comprising an in-range indicator and an overcurrent indicator; and
control circuitry coupled to the current sensor, the control circuitry operable to output a feed rate control signal based on a signal output by the motor current sensor.

18. The control system of claim 17, where the feed rate control signal is a planer feed rate control signal.

19. The control system of claim 17, where the motor current sensor is a magnetic field sensor.

20. The control system of claim 17, where the motor current sensor is a Hall effect sensor.

21. The control system of claim 17, where the control circuitry is further operable to select between multiple control techniques for outputting the feed rate control signal.

22. The control system of claim 21, where the control circuitry is operable to select based on cutting mode.

23. The control system of claim 22, where the cutting mode is a planer 'finish' mode.

24. The control system of claim 22, where the cutting mode is a planer 'dimension' mode.
